# EUROPEAN PATENT SPECIFICATION

(11) **EP 2 380 170 B1**
(45) Date of publication and mention of the grant of the patent: **09.05.2012**
(21) Application number: 09796092.6
(22) Date of filing: 15.12.2009
(51) Int. Cl.: G10L 21/00, H04M 1/60, H04M 1/725

(54) **METHOD AND SYSTEM FOR ADAPTING COMMUNICATIONS**
VERFAHREN UND SYSTEM ZUR ANPASSUNG VON KOMMUNIKATION
PROCÉDÉ ET SYSTÈME D'ADAPTATION DE COMMUNICATIONS

(30) Priority: 19.12.2008 EP 08172357
(43) Date of publication of application: 26.10.2011
(73) Proprietor: Koninklijke Philips Electronics N.V., 5621 BA Eindhoven (NL)
(72) Inventor: BROKKEN, Dirk, NL-5656 AE Eindhoven (NL); VAN SCHIJNDEL, Nicolle, H., NL-5656 AE Eindhoven (NL); JOHNSON, Mark, T., NL-5656 AE Eindhoven (NL); WESTERINK, Joanne, H., D., M., NL-5656 AE Eindhoven (NL); LEMMENS, Paul, M., C., NL-5656 AE Eindhoven (NL)
(74) Representative: Kroeze, Johannes Antonius
(86) International application number: PCT/IB2009/055762
(87) International publication number: WO 2010/070584

(56) References cited:
- WO-A1-2008/004844
- WO-A2-2008/038082
- US-A1- 2003 014 246
- US-A1- 2004 225 640

## Description

### FIELD OF THE INVENTION

The invention relates to a method of adapting communications in a communication system, a system for adapting communications between at least two terminals. The invention also relates to a computer program.

### BACKGROUND OF THE INVENTION

US 2004/0225640 A1 discloses a method wherein communications are enhanced by providing purpose settings for any type of communication. Further, the sender can indicate the general emotion or mood with which a communication is sent by analyzing the content of the communication or based on a sender selection. The framework under which an intended recipient will understand the purpose settings may be anticipated by analysis. Sound, video and graphic content provided in a communication are analyzed to determine responses. Sound content may include a voice mail, sound clip or other audio attachment. Anticipated and intended responses to sound content are performed by, for example, adjusting the tone of the sound, the volume of the sound or other attributes of the sound to enhance meaning.

A problem of the known method is that overall sound settings such as tone and volume are not very suitable for controlling perceived emotions of a person.
US2003/0014246A1 discloses an apparatus for voice modulation in a mobile terminal, the subscriber can select a sound effect which can be applied to voice, in particular the conversion of the height of the voice.
WO2008/038082 A2 discloses a prosody conversion method, and indicates that changing the pitch can indicate excitement or other emotion of a speaker.
WO2008/004844 A1 discloses a system providing voice analysis, where an emotional state of the called party is determined and transmitted to a calling party.

### SUMMARY OF THE INVENTION

It is desirable to provide a method, system and computer program that enable at least one participant to control the emotional aspects of communications conveyed between remote terminals.

This is achieved by the method of adapting communications in a communication system comprising at least two terminals,
wherein a signal carrying at least a representation of at least part of an information content of an audio signal captured at a first terminal and representing speech is communicated between the first terminal and a second terminal,
wherein a modified version of the audio signal is made available for reproduction at the second terminal, said modified version having a modified level of emotionality compared to the audio signal, and
wherein at least one of the terminals generates the modified version by re-creating the audio signal in a version modified such that at least one prosodic aspect of the represented speech is adapted in dependence on input data provided at at least one of the terminals, said input data indicating a desired level of emotionality of the modified version of the audio signal.

The method is based on the insight that prosodics, including variations in syllable length, loudness, pitch and the formant frequencies of speech sounds, largely determine the level of emotionality conveyed by speech. By adapting prosodic aspects of a speech signal, which involves re-creating the speech signal, one can modify the level of emotionality. By doing so in dependence on input data available at or by at least one of the terminals, at least one of the terminals can influence the level of emotionality conveyed in speech that is communicated to the other or others. This can be useful if it is recognized that a user of one of the terminals is apt to lose temper, or be perceived as cold. It can also be useful to tone down the speech of the user of another terminal. The method is based on the surprising appreciation that these types of modifications thus find a useful application in remote communications based on captured speech signals. The method can be implemented with at least one conventional terminal for remote communications, to adapt the perceived emotionality of speech communicated to or from that terminal. In particular, a user of the method can "tone down" voice communications from another person or control how he or she is perceived by that other person, also where that other person is using a conventional terminal (e.g. a telephone terminal).

In an embodiment, the input data includes data representative of user input provided to at least one of the terminals.

This feature provides user with the ability to control the tone of speech conveyed by or to them.

A variant of this embodiment includes obtaining the user input in the form of at least a value on a scale.

Thus, a target value to be aimed at in re-creating the audio signal in a modified version is provided. The user can, for example, indicate a desired level of emotionality with the aid of a dial or slider, either real or virtual. The user input can be used to set one or more of multiple target values, each for a different aspect of emotionality. Thus, this embodiment is also suitable for use where the system implementing the method uses a multi-dimensional model of emotionality.

In an embodiment, the user input is provided at the second terminal and information representative of the user input is communicated to the first terminal and caused to be provided as output through a user interface at the first terminal.

An effect is to provide feedback to the person at the first terminal (e.g. the speaker). Thus, where the user input corresponds to a command to tone down the speech, this fact is conveyed to the speaker, who will then realize firstly that the person he or she is addressing is not able to appreciate that he is, for example, angry, but also that the other person very probably perceived him or her as being too emotional.

An embodiment of the method of adapting communications in a communication system comprising at least two terminals includes analyzing at least a part of the audio signal captured at the first terminal and representing speech in accordance with at least one analysis routine for characterizing an emotional state of a speaker.

An effect is to enable the system carrying out the method to determine the need for, and necessary extent of, modification of the audio signal. The analysis provides a classification on the basis of which action can be taken.

In a variant, at least one analysis routine includes a routine for quantifying at least an aspect of the emotional state of the speaker on a certain scale.

An effect is to provide a variable that can be compared with a target value, and that can be controlled.

Another variant includes causing information representative of at least part of a result of the analysis to be provided as output through a user interface at the second terminal.

An effect is to separate the communication of emotion from the speech that is communicated. Thus, the speech represented in the audio signal can be made to sound less angry, but the party at the second terminal is still made aware of the fact that his or her interlocutor is angry. This feature can be used to help avoid cultural misunderstandings, since the information comprising the results of the analysis is unambiguous, whereas the meaning attached to certain characteristics of speech is culturally dependent.

In an embodiment, a contact database is maintained at at least one of the terminals, and at least part of the input data is retrieved based on a determination by a terminal of an identity associated with at least one other of the terminals between which an active communication link for communicating the signal carrying at least a representation of at least part of an information content of the captured audio signal is established.

Thus, characteristic features of systems and terminals for remote communications (including contact lists and identifiers such as telephone numbers or network addresses) are used to reduce the amount of user interaction required to adapt the affective aspects of voice communications to a target level. A user can provide settings only once, based e.g. on his or her perception of potential communication partners. To set up a session with one of them, the user need only make contact.

In an embodiment, at least part of the input data is obtained by determining at least one characteristic of a user's physical manipulation of at least one input device of a user interface provided at one of the terminals.

Thus, the data representative of user input, or part thereof, is obtained implicitly, whilst the user is providing some other input. The user interface required to implement this embodiment of the method is simplified. For example, forceful and/or rapid manipulation of the input device can indicate a high degree of emotionality. The adaptation in dependence on this input could then be a toning down of the audio signal to make it more neutral.

An embodiment of the method includes replacing at least one word in a textual representation of information communicated between the first terminal and the second terminal in accordance with data obtainable by analyzing the modified version of the audio signal in accordance with at least one analysis routine for characterizing an emotional state of a speaker.

An effect is to avoid dissonance between the information content of what is communicated and the affective content of the modified version of the audio signal when reproduced at the second terminal. The modified version of the audio signal need not actually be analyzed to implement this embodiment. Since it is generated on the basis of input data, this input data is sufficient basis for the replacement of words.

According to another aspect, the system for adapting communications between at least two terminals according to the invention is arranged to make a modified version of an audio signal captured at a first terminal and representing speech available for reproduction at a second terminal, said modified version having a modified level of emotionality compared to the audio signal, and comprises a signal processing system configured to generate the modified version by re-creating the audio signal in a version modified such that at least one prosodic aspect of the represented speech is adapted in dependence on input data provided at at least one of the terminals, said input data indicating a desired level of emotionality of the modified version of the audio signal.

Such a system can be provided in one or both of the first and second terminals or in a terminal relaying the communications between the first and second terminals.

In an embodiment, the system is configured to carry out a method according to the invention.

According to another aspect of the invention, there is provided a computer program including a set of instructions capable, when incorporated in a machine-readable medium, of causing a system having information processing capabilities to perform a method according to the invention.

### BRIEF DESCRIPTION OF THE DRAWINGS

The invention will be explained in further detail with reference to the accompanying drawings, in which:
Fig. 1 is a schematic diagram of two terminals between which a network link can be established for voice communications; and
Fig. 2 is a flow chart outlining a method of adapting the communications between the terminals.

### DETAILED DESCRIPTION

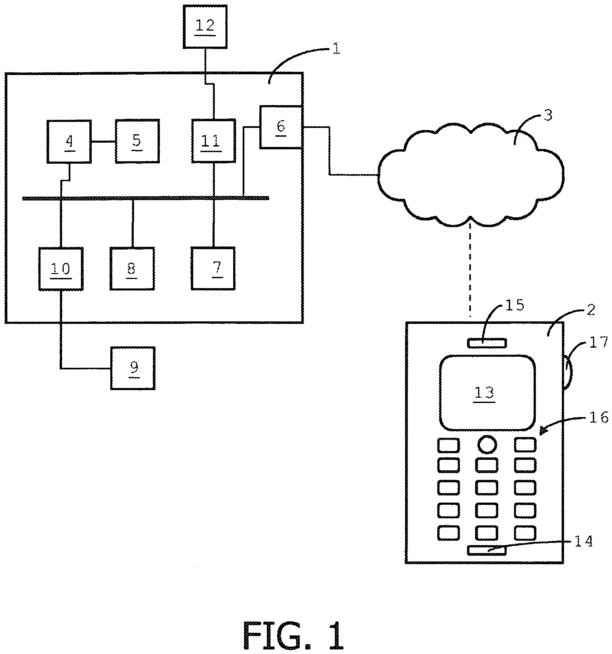

In Fig. 1, a first terminal 1 is shown in detail and a second terminal 2 with a generally similar build-up is shown in outline. The first and second terminals 1,2 are configured for remote communication via a network 3. In the illustrated embodiment, at least voice and data communication are possible. Certain implementations of the network 3 include an amalgamation of networks, e.g. a Very Large Area Network with a Wide Area Network, the latter being, for example, a WiFi-network or WiMax-network. Certain implementations of the network 3 include a cellular telephone network. Indeed, the first and second terminals 1,2, or at least one of them, may be embodied as a mobile telephone handset.

The first terminal 1 includes a data processing unit 4 and main memory 5, and is configured to execute instructions encoded in software, including those that enable the first terminal 1 to adapt information to be exchanged with the second terminal 2. The first terminal 1 includes an interface 6 to the network 3, a display 7 and at least one input device 8 for obtaining user input. The input device 8 includes one or more physical keys or buttons, in certain variants also in the form of a scroll wheel or a joystick, for manipulation by a user. A further input device is integrated in the display 7 such that it forms a touch screen. Audio signals can be captured using a microphone 9 and A/D converter 10. Audio information can be rendered in audible form using an audio output stage 11 and at least one loudspeaker 12.

Similarly, the second terminal 2 includes a screen 13, microphone 14, loudspeaker 15, keypad 16 and scroll wheel 17.

In the following, various variants of how an audio signal representing speech is captured at the first terminal 1, is adapted, and is communicated for reproduction by the second terminal 2 will be described. Of course, the methods also work for communication in the other direction. These methods enable at least one of the users of the terminals 1,2 to control the affective, i.e. the emotional, content of the communication signal whilst retaining the functional information that is communicated.

To this end, a modified version of the audio signal captured at the first terminal 1 is made available for audible reproduction at the second terminal 2. At least one of the terminals 1,2 generates the modified version by re-creating the audio signal in a version modified such that at least one prosodic aspect of the represented speech is adapted. Where the first terminal 1 generates the modified version of the captured audio signal, this modified version is transmitted to the second terminal 2 over the network 3. Where the second terminal 2 generates the modified version, it receives an audio signal corresponding to the captured audio signal from the first terminal 1. In either variant, a representation of at least part of an information content of the captured audio signal is transmitted. It is also possible for both terminals 1,2 to carry out the modification steps, such that the second terminal's actions override or enhance the modifications made by the first terminal 1.

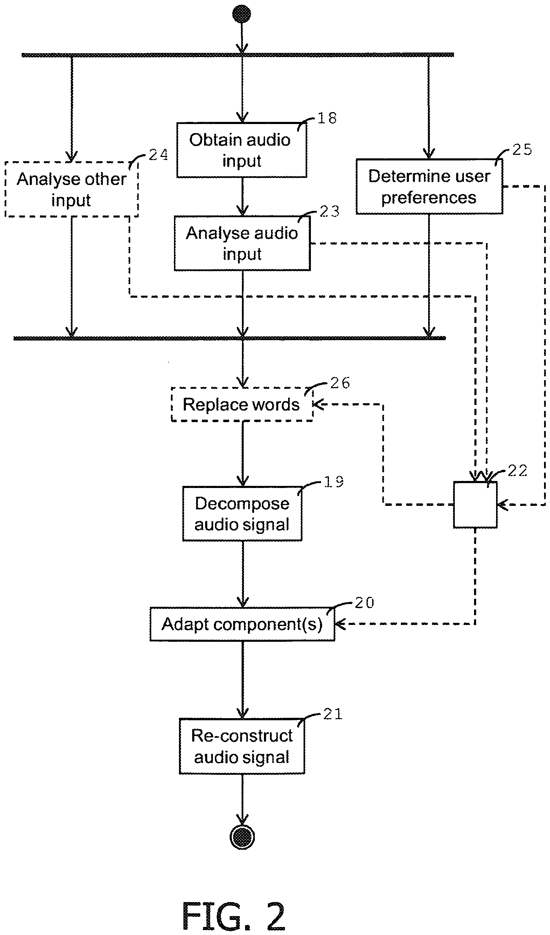

Assuming only one terminal makes the modifications, that terminal generating the modified version of the audio signal receives digital data representative of the original captured audio signal in a first step 18 (Fig. 2). Incidentally, this may be a filtered version of the audio signal captured by the microphone 9.

An adaptation module in the terminal generating the modified version of the audio signal enhances or reduces the emotional content of the audio signal. A technique for doing this involves modification of the duration and fundamental frequency of speech based on simple waveform manipulations. Modification of the duration essentially alters the speech rhythm and tempo. Modification of the fundamental frequency changes the intonation. Suitable methods are known from the field of artificial speech synthesis. An example of a method, generally referred to by the acronym PSOLA, is given in Kortekaas, R. and Kohlrausch, A., "Psychoacoustical evaluation of the pitch-synchronous overlap-and-add speech-waveform manipulation technique using single-formant stimuli", J. Ac. Soc. Am., JASA, 101 (4), pp. 2202-2213.

The adaptation module decomposes the audio signal (step 19), using e.g. a Fast Fourier Transform. If enhancement of the level of emotionality is required, more variation is added to the fundamental frequency component (step 20). Then (step 21), the audio signal is re-synthesized from the modified and unmodified components.

Input data 22 to such a process provides the basis for the degree of emotionality to be included in the modified version of the audio signal.

To assemble the input data 22, several methods are possible, which may be combined. In certain embodiments, only one is used.

Generally, the input data 22 includes the preferred degree of emotionality and optionally the actual degree of emotionality of the person from whom the audio signal obtained in the first step 18 originated, the person for whom it is intended, or both. The degree of emotionality can be parameterized in multiple dimensions, based on e.g. a valence-arousal model, such as described in e.g. Russel, J.A., "A circumplex model of affect", Journal of Personality and Social Psychology 39 (6), 1980, pp. 1161-1178. In an alternative embodiment, a set of basic emotions or a hierarchical structure provides a basis for a characterization of emotions.

In the illustrated embodiment, in a step 23 preceding the steps 19,21 in which the audio signal is re-created in a modified version or combined with the decomposition step 19, the audio input is analyzed in accordance with at least one analysis routine for determining an actual level of emotionality of the speaker.

In combination with the decomposition step 19, the analysis can involve an automatic analysis of the prosody of the speech represented in the audio signal to discover the tension the speaker is experiencing. Using a frequency transform, e.g. a Fast Fourier Transform, of the audio signal, the base frequency of the speaker's voice is determined. Variation in the base frequency, e.g. quantified in the form of the standard variation, is indicative of the intensity of emotions that are experienced. Increasing variation is correlated with increasing emotional intensity. Other speech parameters can be determined and used to analyze the level of emotion as well, e.g. mean amplitude, segmentation or pause duration.

In another, optional, step 24, at least part of the component of the input data 22 representative of a user's actual degree of emotionality is obtained by determining at least one characteristic of a user's physical manipulation of at least one input device of a user interface provided at one of the terminals. This step can involve an analysis of at least one of the timing, speed and force of strokes on a keyboard comprised in the input device 8 or made on a touch screen comprised in the display 7, to determine the level of emotionality of the user of the first terminal 1. A similar analysis of the manner of manipulation of the keypad 16 or scroll wheel 17 of the second terminal 2 can be carried out. Such an analysis need not be carried out concurrently with the processing of the audio signal, but may also be used to characterize users in general. However, to take account of mood variations, the analysis of such auxiliary input is best carried out on the basis of user input provided not more than a pre-determined interval of time prior to communication of the information content of the audio signal from the first terminal 1 to the second terminal 2.

A further type of analysis involves analysis of the information content of data communicated between the first terminal 1 and the second terminal 2. This can be a message comprising textual information and provided in addition to the captured audio signal, in which case the analysis is comprised in the (optional) step 24. It can also be textual information obtained by speech-to-text conversion of part or all of the captured audio signal, in which case the analysis is part of the step 23 of analyzing the audio input. The analysis generally uses a database of emotional words ('affect dictionaries') and the magnitude of emotion associated with the word. In an advanced embodiment, the database comprises a mapping of emotional words against a number of emotion dimensions, e.g. valence, arousal and power.

The component of the input data 22 controlling the level of emotionality and indicating a preferred level of emotionality further includes data characteristic of the preferences of the user of the first terminal 1, the user of the second terminal 2 or both. Thus, this data is obtained (step 25) prior to the steps 20,21 of adapting audio signal components and reconstructing the audio signal, and it can be carried out repeatedly to obtain current user preference data.

Optionally, this component of the input includes data retrieved based on a determination by the terminal carrying out the method of an identity associated with at least one other of the terminals between which an active communication link for communicating the signal carrying at least a representation of at least part of an information content of the captured audio signal is established. The first and second terminals 1,2 maintain a database of contact persons which includes for each contact a field comprising default affective content filter settings. Alternatively or additionally, each contact can be associated with one or more groups, and respective default affective content settings can be associated with these groups. Thus, when a user of one of the terminals 1,2 sets up an outgoing call or accepts an incoming call, the identity of the other party, or at least of the terminal 1,2, is determined and used to retrieve default affective content filter settings. Generally, these take the form of a target level of emotionality for at least one of: a) a modified version of an audio signal captured at the other terminal (adaptation of incoming communications); and b) a modified version of an audio signal captured at the same terminal (adaptation of outgoing communications).

The default settings can be overridden by user input provided during or just prior to the communication session.

Generally, such user input is in the form of a value on a scale. In particular, the user of the first terminal 1 and/or the user of the second terminal 2 are provided with a means to control the affective content in the modified version of the captured audio signal manually, using an appropriate and user-friendly interface.

Thus, where the user input is provided by the user of the second terminal 2, the scroll wheel 17 can be manipulated to increase or decrease the level of emotionality on the scale. Data representative of such manipulation is provided to the terminal carrying out the steps 20,21 of synthesizing the modified version of the audio signal. Thus, the user can control the magnitude of the affective content and/or the affective style of the speech being rendered or input to his or her terminal 1,2. To make this variant of the adaptation method simpler to implement and use, the interface element manipulated by the user can have a dual function. For example, the scroll wheel 17 can provide volume control in one mode and emotional content level control in another mode. In a simple implementation, a push on the scroll wheel 17 or some other type of binary input allows the user to switch between modes.

Another type of user interface component enables the user partially or fully to remove all affective content from an audio signal representing speech. In one variant, this user interface component comprises a single button, which may be a virtual button in a Graphical User Interface.

In the case where the user input is used by the second terminal 2 to control the affective content of speech communicated from the first terminal 1 to the second terminal 2 for rendering, information representative of the user input provided at the second terminal 2 can be communicated to the first terminal 1 and caused to be provided as output through a user interface of the first terminal 1. This can be audible output through the loudspeaker 12, visible output on the display 7 or a combination. In another embodiment, a tactile feedback signal is provided. Thus, for example, if the user of the second terminal 2 presses a button on the keypad 16 to remove all affective content from the speech being rendered at the second terminal 2, this fact is communicated to the first terminal 1. The user of the first terminal 1 can adjust his tone or take account of the fact that any non-verbal cues to the other party will not be perceived by that other party.

Another feature of the method includes causing information representative of a result of the analysis carried out in the analysis steps 23,24 to be provided as output through a user interface at the second terminal 2. Thus, where the first terminal 1 carries out the method of Fig. 2, information representative of the level of emotionality of the speaker at the first terminal 1 is communicated to the second terminal 2, which provides appropriate output, e.g. on the screen 13. Where the second terminal 2 carries out the method of Fig. 2 on incoming audio signals, the result of the analysis steps 23,24 is provided by it directly. This feature is generally implemented when the input to the reconstruction step 21 is such as to cause a significant part of the emotionality to be absent from the modified version of the captured audio signal. The provision of the analysis output allows for the emotional state of the user of the first terminal 1 to be expressed in a neutral way. This provides the users with control over emotions without loss of potentially useful information about the speaker's state. In addition, it can help the user of the second terminal 2 recognize emotions, because emotions can easily be wrongly interpreted (e.g. as angry instead of upset), especially in case of cultural and regional differences. Alternatively or additionally, the emotion interpretation and display feature could also be implemented on the first terminal 1 to allow the user thereof to control his or her emotions using the feedback thus provided.

To avoid dissonance between the functional information content of what is rendered at the second terminal 2 and how it is rendered, the method of Fig. 2 includes the optional step 26 of replacing at least one word in a textual representation of information communicated between the first and second terminal 2 in accordance with data obtainable by analyzing the modified audio signal in accordance with at least one analysis routine for determining the level of emotionality of a speaker. To this end, the audio input is converted to text to enable words to be identified. Those words with a particular emotional meaning are replaced or modified. The replacement words and modifying words are synthesized using a text-to-speech conversion method, and inserted into the audio signal. This step 26 could thus also be carried out after the reconstruction step 21. For the replacement of words, a database of words is used that enables a word to be replaced with a word having the same functional meaning, but e.g. an increased or decreased value on a scale representative of arousal for the same valence. For modification, an adjective close to the emotional word is replaced or an adjective is inserted in order to diminish or strengthen the meaning of the emotional word.

At least in the variant of Fig. 2, the resultant information content is rendered at the second terminal 2 with prosodic characteristics consistent with a level of emotionality determined by at least one of the user of the first terminal 1 and the user of the second terminal 2, providing a degree of control of non-verbal aspects of remote voice communications.

It should be noted that the above-mentioned embodiments illustrate, rather than limit, the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

Although mobile communication terminals are suggested by Fig. 1, the methods outlined above are also suitable for implementation in e.g. a call centre or a video conferencing system. Audio signals can be communicated in analogue or digital form. The link between the first and second terminal 1,2 need not be a point-to-point connection, but can be a broadcast link, and communications can be packet-based. In the latter embodiment, identifications associated with other terminals can be obtained from the packets and used to retrieve default settings for levels of emotionality.

Where reference is made to levels of emotionality, these can be combinations of values, e.g. where use is made of a multidimensional parameter space to characterize the emotionality of a speaker, or they can be the value of one of those multiple parameters only.

## Claims

1. Method of adapting communications in a communication system comprising at least two terminals (1,2),
wherein a signal carrying at least a representation of at least part of an information content of an audio signal captured at a first terminal (1) and representing speech is communicated between the first terminal (1) and a second terminal (2),
wherein a modified version of the audio signal is made available for reproduction at the second terminal (2), said modified version having a modified level of emotionality compared to the audio signal, and
wherein at least one of the terminals (1,2) generates the modified version by re-creating the audio signal in a version modified such that at least one prosodic aspect of the represented speech is adapted in dependence on input data (22) provided at at least one of the terminals (1,2), said input data (22) indicating a desired level of emotionality of the modified version of the audio signal.

2. Method according to claim 1, wherein the input data (22) includes data representative of user input provided to at least one of the terminals (1,2).

3. Method according to claim 2, including:
obtaining the user input in the form of at least a value on a scale.

4. Method according to claim 2,
wherein the user input is provided at the second terminal (2) and information representative of the user input is communicated to the first terminal (1) and caused to be provided as output through a user interface (12,7) at the first terminal (1).

5. Method according to claim 1, including:
analyzing at least a part of the audio signal captured at the first terminal (1) and representing speech in accordance with at least one analysis routine for characterizing an emotional state of a speaker.

6. Method according to claim 5,
wherein at least one analysis routine includes a routine for quantifying at least an aspect of the emotional state of the speaker on a certain scale.

7. Method according to claim 5, including:
- causing information representative of at least part of a result of the analysis to be provided as output through a user interface (13,15) at the second terminal (2).

8. Method according to claim 1,
wherein a contact database is maintained at at least one of the terminals (1,2), and wherein at least part of the input data (22) is retrieved based on a determination by a terminal (1,2) of an identity associated with at least one other of the terminals (1,2) between which an active communication link for communicating the signal carrying at least a representation of at least part of an information content of the captured audio signal is established.

9. Method according to claim 1,
wherein at least part of the input data (22) is obtained by determining at least one characteristic of a user's physical manipulation of at least one input device (8,16,17) of a user interface provided at one of the terminals (1,2).

10. Method according to claim 1, further including:
- replacing at least one word in a textual representation of information communicated between the first terminal (1) and the second terminal (2) in accordance with data obtainable by analyzing the modified version of the audio signal in accordance with at least one analysis routine for characterizing an emotional state of a speaker.

11. System for adapting communications between at least two terminals (1,2),
- the system being arranged to make a modified version of an audio signal captured at a first terminal (1) and representing speech available for reproduction at a second terminal (2), said modified version having a modified level of emotionality compared to the audio signal, which system comprises:
- a signal processing system (4,5) configured to generate the modified version by re-creating the audio signal in a version modified such that at least one prosodic aspect of the represented speech is adapted in dependence on input data (22) provided at at least one of the terminals (1,2), said input data (22) indicating a desired level of emotionality of the modified version of the audio signal.

12. Computer program including a set of instructions capable, when incorporated in a machine-readable medium, of causing a system having information processing capabilities to perform a method according to any one of claims 1-10.

## Patentansprüche

1. Verfahren zur Anpassung von Kommunikation in einem Kommunikationssystem mit mindestens zwei Endgeräten (1,2),
- wobei ein Signal, das zumindest eine Darstellung von zumindest einem Teil eines Informationsinhalts eines an einem ersten Endgerät (1) erfassten und Sprache darstellenden Audiosignals enthält, zwischen dem ersten Endgerät (1) und einem zweiten Endgerät (2) übertragen wird,
- wobei eine modifizierte Version des Audiosignals zur Wiedergabe an dem zweiten Endgerät (2) zur Verfügung gestellt wird, wobei die modifizierte Version eine modifizierte Emotionalitätsebene im Vergleich zu dem Audiosignal aufweist, und
- wobei mindestens eines der Endgeräte (1,2) die modifizierte Version durch Wiederherstellen des Audiosignals in einer Version erzeugt, die so modifiziert ist, dass mindestens ein prosodischer Aspekt der dargestellten Sprache in Abhängigkeit von an mindestens einem der Endgeräte (1,2) vorgesehenen Eingangsdaten (22) angepasst wird, wobei die Eingangsdaten (22) eine gewünschte Emotionalitätsebene der modifizierten Version des Audiosignals anzeigen.

2. Verfahren nach Anspruch 1,
- wobei die Eingangsdaten (22) Daten enthalten, die für eine Benutzereingabe, die mindestens einem der Endgeräte (1,2) zugeführt wurde, repräsentativ sind.

3. Verfahren nach Anspruch 2, wonach:
- die Benutzereingabe in Form von zumindest einem Wert auf einer Skala empfangen wird.

4. Verfahren nach Anspruch 2,
- wobei die Benutzereingabe an dem zweiten Endgerät (2) bereitgestellt wird und Informationen, die für die Benutzereingabe repräsentativ sind, zu dem ersten Endgerät (1) übertragen werden und bewirkt wird, dass diese als Ausgabe durch eine Benutzeroberfläche (12,7) an dem ersten Endgerät (1) bereitgestellt werden.

5. Verfahren nach Anspruch 1, wonach:
- zumindest ein Teil des an dem ersten Endgerät (1) erfassten Audiosignals analysiert und entsprechend mindestens einer Analyseroutine Sprache dargestellt wird, um einen Gefühlszustand eines Sprechers zu charakterisieren.

6. Verfahren nach Anspruch 5,
- wobei mindestens eine Analyseroutine eine Routine beinhaltet, um zumindest einen Aspekt des Gefühlszustands des Sprechers auf einer bestimmten Skala zu quantifizieren.

7. Verfahren nach Anspruch 5, wonach:
- bewirkt wird, dass Informationen, die für zumindest einen Teil eines Ergebnisses der Analyse repräsentativ sind, als Ausgabe durch eine Benutzeroberfläche (13,15) an dem zweiten Endgerät (2) bereitgestellt werden.

8. Verfahren nach Anspruch 1,
- wobei eine Kontaktdatenbank an mindestens einem der Endgeräte (1,2) aufrechterhalten wird, und wobei zumindest ein Teil der Eingangsdaten (22) aufgrund einer Ermittlung einer Identität durch ein Endgerät (1,2) abgerufen wird, die mindestens einem weiteren der Endgeräte (1,2) zugeordnet wird, zwischen denen eine aktive Kommunikationsverbindung zur Übertragung des Signals, das zumindest eine Darstellung von zumindest einem Teil eines Informationsinhalts des erfassten Audiosignals enthält, hergestellt wird.

9. Verfahren nach Anspruch 1,
- wobei zumindest ein Teil der Eingangsdaten (22) durch Ermitteln von mindestens einer Charakteristik einer benutzerseitigen, physikalischen Manipulation von mindestens einer Eingabeeinrichtung (8,16,17) einer an einem der Endgeräte (1,2) vorgesehenen Benutzeroberfläche erhalten wird.

10. Verfahren nach Anspruch 1, wonach weiterhin:
- mindestens ein Wort in einer Textdarstellung von Informationen, die zwischen dem ersten Endgerät (1) und dem zweiten Endgerät (2) übertragen werden, entsprechend Daten, die durch Analysieren der modifizierten Version des Audiosignals gemäß mindestens einer Analyseroutine zur Charakterisierung eines Gefühlszustands eines Sprechers erhalten werden können, ersetzt wird.

11. System zur Anpassung von Kommunikationen zwischen mindestens zwei Endgeräten (1,2),
- wobei das System so eingerichtet ist, dass es eine modifizierte Version eines an einem ersten Endgerät (1) erfassten Audiosignals erzeugt und zur Wiedergabe an einem zweiten Endgerät (2) zur Verfügung stehende Sprache darstellt, wobei die modifizierte Version eine modifizierte Emotionalitätsebene im Vergleich zu dem Audiosignal aufweist, wobei das System umfasst:
- ein Signalverarbeitungssystem (4,5), das so konfiguriert ist, dass es die modifizierte Version durch Wiederherstellen des Audiosignals in einer Version erzeugt, die so modifiziert ist, dass mindestens ein prosodischer Aspekt der dargestellten Sprache in Abhängigkeit von an mindestens einem der Endgeräte (1,2) vorgesehenen Eingangsdaten (22) angepasst wird, wobei die Eingangsdaten (22) eine gewünschte Emotionalitätsebene der modifizierten Version des Audiosignals anzeigen.

12. Computerprogramm, das eine Reihe von Instruktionen enthält, die, wenn diese in ein maschinenlesbares Medium integriert sind, imstande sind, zu bewirken, dass ein System mit Informationsverarbeitungsfähigkeiten ein Verfahren nach einem der Ansprüche 1-10 ausführt.

## Revendications

1. Procédé d'adaptation des communications dans un système de communication comprenant au moins deux terminaux (1, 2),
- dans lequel un signal transportant au moins une représentation d'au moins une partie d'un contenu informatif d'un signal audio capturé sur un premier terminal (1) et représentant de la parole est transmis entre le premier terminal (1) et un second terminal (2),
- dans lequel une version modifiée du signal audio est mise à disposition pour reproduction sur le second terminal (2), ladite version modifiée ayant un niveau émotionnel modifié par rapport au signal audio, et
- dans lequel au moins un des terminaux (1, 2) produit la version modifiée en reconstituant le signal audio dans une version modifiée de sorte qu'au moins un aspect prosodique de la parole représentée est adapté en fonction de données d'entrée (22) fournies sur au moins un des terminaux (1, 2), lesdites données d'entrée (22) indiquant le niveau émotionnel souhaité de la version modifiée du signal audio.

2. Procédé selon la revendication 1,
- dans lequel les données d'entrée (22) comprennent des données représentatives d'une entrée utilisateur fournie à au moins un des terminaux (1, 2).

3. Procédé selon la revendication 2, comprenant l'étape qui consiste à :
- obtenir l'entrée utilisateur sous forme d'au moins une valeur sur une échelle.

4. Procédé selon la revendication 2,
- dans lequel l'entrée utilisateur est fournie sur le second terminal (2) et les informations représentatives de l'entrée utilisateur sont transmises au premier terminal (1) et amenées à être fournies en tant que sortie par l'intermédiaire d'une interface utilisateur (12, 7) sur le premier terminal (1).

5. Procédé selon la revendication 1, comprenant l'étape qui consiste à :
- analyser au moins une partie du signal audio capturé dans le premier terminal (1) et représentant de la parole selon au moins une routine d'analyse pour caractériser l'état émotionnel d'un locuteur.

6. Procédé selon la revendication 5,
- dans lequel au moins une routine d'analyse comprend une routine destinée à quantifier au moins un aspect de l'état émotionnel du locuteur sur une certaine échelle.

7. Procédé selon la revendication 5, comprenant l'étape qui consiste à :
- faire en sorte que les informations représentatives d'au moins une partie du résultat de l'analyse soient fournies en tant que sortie par l'intermédiaire d'une interface utilisateur (13, 5) sur le second terminal (2).

8. Procédé selon la revendication 1,
- dans lequel une base de données des contacts est gérée dans au moins un des terminaux (1, 2), et dans lequel au moins une partie des données d'entrée (22) sont récupérées sur la base de la détermination par un terminal (1, 2) d'une identité associée à au moins un autre des terminaux (1, 2) entre lesquels est établie une liaison de communication active permettant de transmettre le signal transportant au moins une représentation d'au moins une partie d'un contenu informatif du signal audio capturé.

9. Procédé selon la revendication 1,
- dans lequel au moins une partie des données d'entrée (22) sont obtenues par détermination d'au moins une caractéristique d'une manipulation physique par un utilisateur d'au moins un dispositif d'entrée (8, 16, 17) d'une interface utilisateur fournie sur un des terminaux (1, 2).

10. Procédé selon la revendication 1, comprenant en outre l'étape qui consiste à :
- remplacer au moins un mot d'une représentation textuelle des informations transmises entre le premier terminal (1) et le second terminal (2) en fonction de données pouvant être obtenues par une analyse de la version modifiée du signal audio selon au moins une routine d'analyse destinée à caractériser l'état émotionnel d'un locuteur.

11. Système permettant d'adapter les communications entre au moins deux terminaux (1, 2),
- le système étant conçu pour mettre une version modifiée d'un signal audio capturé sur un premier terminal (1) et représentant de la parole à disposition pour reproduction sur un second terminal (2), ladite version modifiée ayant un niveau émotionnel modifié par rapport au signal audio, ledit système comprenant :
- un système de traitement de signal (4, 5) conçu pour produire la version modifiée par reconstitution du signal audio dans une version modifiée de sorte qu'au moins un aspect prosodique de la parole représentée est adapté en fonction de données d'entrée (22) fournies sur au moins un des terminaux (1, 2), lesdites données d'entrée (22) indiquant le niveau émotionnel souhaité de la version modifiée du signal audio.

12. Programme informatique comprenant un jeu d'instructions aptes, une fois intégrées dans un support lisible par ordinateur, à amener un système doté de fonctionnalités de traitement d'information à exécuter un procédé selon l'une quelconque des revendications 1 à 10.
